# EUROPEAN PATENT SPECIFICATION

(11) **EP 3 059 011 B1**
(45) Date of publication and mention of the grant of the patent: **02.05.2018**
(21) Application number: 15155838.4
(22) Date of filing: 19.02.2015
(51) Int. Cl.: B01J 20/20, B01D 53/02, B01J 20/28, B01J 20/30, C01B 32/00

(54) **CARBON POROUS BODY, METHOD FOR PRODUCING THE SAME, AND AMMONIA-ADSORBING MATERIAL**
Poröser Kohlenstoffkörper, Herstellungsverfahren dafür und ammoniakabsorbierendes Material
Corps poreux à base de carbone, son procédé de production, et matériau adsorbant d'ammoniaque

(43) Date of publication of application: 24.08.2016
(73) Proprietor: Kabushiki Kaisha Toyota Chuo Kenkyusho, Nagakute-shi, Aichi 480-1192 (JP)
(72) Inventor: Setoyama, Norihiko, Nagakute-shi, Aichi 480-1192 (JP)
(74) Representative: Kramer Barske Schmidtchen Patentanwälte PartG mbB

(56) References cited:
- WO-A1-2012/006973
- JP-A- 2006 016 270

## Description

### TECHNICAL FIELD

The present invention relates to a carbon porous body, a method for producing the same, and an ammonia-adsorbing material.

### BACKGROUND ART

Hitherto, carbon porous bodies have been used in various technical fields. Specifically, carbon porous bodies have been used as electrode materials of electrochemical capacitors, materials that support enzyme electrodes of biofuel cells, adsorbing materials of canisters, and adsorbing materials of fuel refining facilities.

Electrochemical capacitors are capacitors that use capacitances generated due to a non-faradaic reaction in which electrons are not transferred between an electrode and ions in an electrolyte solution or a faradaic reaction in which electrons are transferred between an electrode and ions in an electrolyte solution at interfaces of electrodes (positive electrode and negative electrode). Biofuel cells include a negative electrode, a positive electrode, an electrolyte, and a separator as in common fuel cells, and use enzymes in the negative electrode and the positive electrode. In such a biofuel cell, a sugar is decomposed by an enzyme on the negative electrode side to generate protons and electrons. The protons are transferred to the positive electrode side through the electrolyte, and the electrons are transferred to the positive electrode side through an external circuit. In the positive electrode, a reduction reaction of oxygen using the protons and the electrons is allowed to proceed by an enzyme, and as a result, water is produced. Through a series of these reactions, electrical energy can be extracted from the biofuel cell. Canisters are can-shaped containers in which a carbon porous body is packed, and are installed in automobiles. While an engine of an automobile is stopped, such a canister receives and adsorbs gasoline vapor generated in a fuel tank through piping. On the other hand, while the engine is running, fresh air is passed through the canister, whereby the canister releases the adsorbed gasoline vapor and supplies the gasoline vapor to a combustion chamber of the engine. In fuel refining facilities, fuel is refined by adsorbing impurities contained in the fuel with a carbon porous body.

The inventor of the present invention developed a carbon porous body in which a part of a carbon skeleton is substituted with nitrogen atoms (PTL 1). This carbon porous body has a micropore structure having an average pore diameter of 2 nm or less. A low-density carbon foam having a cell size of about 0.1 µm is also known (PTL 2). This carbon foam is synthesized by covalently crosslinking a polymer cluster which is obtained by polycondensation of resorcinol with formaldehyde to synthesize a gel, processing the gel under supercritical conditions to produce an aerogel, and carbonizing the aerogel.

### CITATION LIST

### PATENT LITERATURE

[PTL 1] Japanese Unexamined Patent Application Publication No. 2011-051828
[PTL 2] U.S. Patent No. 4,873,218
WO 2012/006973 A1 relates to a method for producing carbon foams, wherein a) a condensation polymer obtained from an aldehyde and an aromatic alcohol is pyrolized, and b) the product is treated with water vapour, nitrogen, CO₂, air, oxygen or a mixture of the above during or after the pyrolysis.
JP 2006-016270 A relates to a basic metal compound-carrying porous carbon, produced by heat treatment of e.g. a sodium, potassium or calcium salt of terephthalic acid at 600 or 900°C under an argon atmosphere.

### DISCLOSURE OF INVENTION

Hitherto, there is no known carbon porous body which has a mesopore structure and in which the difference in the amount of nitrogen adsorption with respect to a relative pressure difference is large in a range where the relative pressure is relatively large. Accordingly, a method for easily producing such a carbon porous body is also not known. Such a carbon porous body is expected to be used not only as desorption materials of a specific gas but also as electrode materials of electrochemical capacitors, materials that support enzyme electrodes of biofuel cells, adsorbing materials of canisters, and adsorbing materials of fuel refining facilities.

The present invention has been made in order to solve the above problems. A main object of the present invention is to provide a carbon porous body which has a mesopore structure and in which the difference in the amount of nitrogen adsorption with respect to a relative pressure difference is large in a range where the relative pressure is relatively large.

### SOLUTION TO PROBLEM

As a result of intensive studies conducted in order to achieve the above object, the inventors of the present invention found that a carbon porous body obtained by heating a calcium salt of terephthalic acid in an inert atmosphere at 550°C to 700°C to form a complex of carbon and calcium carbonate, and removing the calcium carbonate by washing the complex with an acidic aqueous solution has good characteristics. This finding led to the completion of the present invention.

According to a carbon porous body of the present invention, a volume of pores having diameters of 2 nm or less, the volume being determined by density functional theory (DFT) analysis, is 0.12 mL/g or less, and a nitrogen adsorption isotherm at a temperature of 77 K belongs to Type IV of an International Union of Pure and Applied Chemistry (IUPAC) classification (type showing that the porous body has mesopores). In the nitrogen adsorption isotherm, an amount of adsorption at a relative pressure P/P₀ of 0.5 is 0.8 g/g or less and an amount of adsorption at a relative pressure P/P₀ of 0.9 is 1.5 g/g or more.

A method for producing a carbon porous body of the present invention includes heating an alkaline earth metal salt of benzene dicarboxylic acid in an inert atmosphere at 550°C to 700°C to form a complex of carbon and an alkaline earth metal carbonate, and removing the carbonate by washing the complex with a washing liquid that can dissolve the carbonate to obtain a carbon porous body.

Furthermore, an ammonia-adsorbing material of the present invention is obtained by using the above carbon porous body of the present invention.

### ADVANTAGEOUS EFFECTS OF INVENTION

According to the carbon porous body of the present invention, when a gas pressure is changed in a particular range with regard to a particular gas, the amount of adsorption and desorption of the gas can be increased. In addition, according to the method for producing a carbon porous body of the present invention, such a carbon porous body can be easily obtained. Furthermore, according to the ammonia-adsorbing material of the present invention, when a gas pressure is changed in a particular range with regard to ammonia gas, the amount of adsorption and desorption of the ammonia gas can be increased.

### BRIEF DESCRIPTION OF DRAWINGS

Fig. 1 is a graph of an adsorption isotherm of Type IV of the IUPAC classification.
Fig. 2 is a graph of nitrogen adsorption isotherms of Examples 1 to 3 and Comparative Examples 1, 3, and 4.
Fig. 3 is a graph of ammonia adsorption isotherms of Examples 1 to 3 and Comparative Examples 1, 3, and 4.
Fig. 4 is a graph showing a relationship between the difference in the amount of nitrogen adsorption and the difference in the amount of ammonia adsorption.
Fig. 5 is a graph of nitrogen adsorption isotherms of Examples 2, 3, and 6.

### BEST MODE FOR CARRYING OUT THE INVENTION

In a carbon porous body of the present invention, a volume of pores having diameters of 2 nm or less, the volume being determined by DFT analysis, is 0.12 mL/g or less and preferably 0.11 mL/g or less, and a nitrogen adsorption isotherm at a temperature of 77 K belongs to Type IV of an IUPAC classification. In the nitrogen adsorption isotherm, an amount of adsorption at a relative pressure P/P₀ of 0.5 is 0.8 g/g or less and an amount of adsorption at a relative pressure P/P₀ of 0.9 is 1.5 g/g or more.

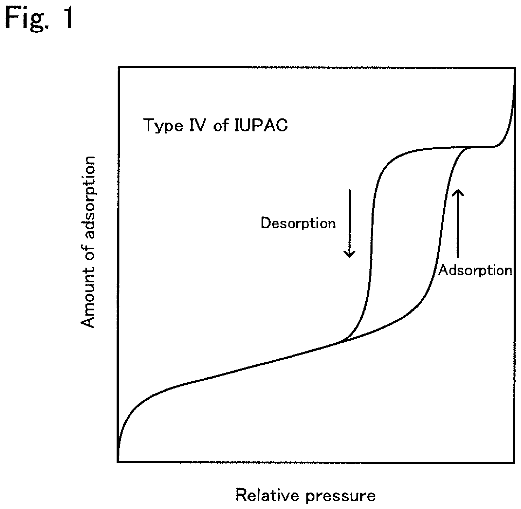

With regard to the carbon porous body of the present invention, the type of a nitrogen adsorption isotherm defined by the IUPAC classification is Type IV (refer to Fig. 1), which shows that the carbon porous body has mesopores. In addition, the volume of pores having diameters of 2 nm or less is small, namely, 0.12 mL/g or less. Accordingly, the carbon porous body of the present invention is mostly made up of mesopores. Furthermore, in the carbon porous body of the present invention, in a nitrogen adsorption isotherm, a value determined by subtracting the amount of nitrogen adsorption at a relative pressure P/P₀ of 0.5 from the amount of nitrogen adsorption at a relative pressure P/P₀ of 0.9 is 0.7 g/g or more. Accordingly, the amount of change in the amount of nitrogen adsorption with respect to the amount of change in the relative pressure is large in the range where the relative pressure is relatively large. Therefore, when the gas pressure is changed in a particular range with regard to a particular gas, the amount of adsorption and desorption of the gas can be increased.

The carbon porous body of the present invention may have, for example, a BET specific surface area of 800 m²/g or more. In particular, the BET specific surface area is preferably 1,000 m²/g or more, more preferably 1,200 m²/g or more, and still more preferably 1,250 m²/g or more. This is because the magnitude of the specific surface area correlates with an improvement in various functional characteristics. The upper limit may be, for example, 2,630 m²/g or less.

A method for producing a carbon porous body of the present invention includes heating an alkaline earth metal salt of benzene dicarboxylic acid in an inert atmosphere at 550°C to 700°C to form a complex of carbon and an alkaline earth metal carbonate, and removing the carbonate by washing the complex with a washing liquid that can dissolve the carbonate to obtain a carbon porous body. This method is suitable for producing the above carbon porous body of the present invention.

In the method for producing a carbon porous body of the present invention, examples of the benzene dicarboxylic acid include phthalic acid (benzene-1,2-dicarboxylic acid), isophthalic acid (benzene-1,3-dicarboxylic acid), and terephthalic acid (benzene-1,4-dicarboxylic acid). Among these, terephthalic acid is preferred. Examples of the alkaline earth metal include magnesium, calcium, strontium, and barium. Among these, calcium is preferred. The alkaline earth metal salt of benzene dicarboxylic acid may be obtained by purchasing a commercially available product. Alternatively, the alkaline earth metal salt of benzene dicarboxylic acid may be synthesized by mixing benzene dicarboxylic acid and a hydroxide of an alkaline earth metal in water. In such a case, regarding the molar ratio of the benzene dicarboxylic acid to the hydroxide of the alkaline earth metal, these compounds may be used in only a stoichiometric amount based on a neutralization reaction formula. Alternatively, these compounds may be used so that the amount of one of the compounds is excessive relative to the amount of the other compound. For example, the molar ratio may be set to be in the range of 1.5:1 to 1:1.5. In mixing benzene dicarboxylic acid and a hydroxide of an alkaline earth metal in water, the benzene dicarboxylic acid and the hydroxide of the alkaline earth metal may be heated to 50°C to 100°C.

In the method for producing a carbon porous body of the present invention, examples of the inert atmosphere include a nitrogen atmosphere and an argon atmosphere. The heating temperature is preferably set to 550°C to 700°C. A heating temperature of lower than 550°C is not preferable because when the relative pressure P/P₀ of a nitrogen adsorption isotherm at 77 K is 0.9, the amount of nitrogen adsorption is not sufficiently large. A heating temperature of higher than 700°C is not preferable because a carbon porous body is not obtained. It is believed that the complex of carbon and an alkaline earth metal carbonate obtained after heating has a structure in which the alkaline earth metal carbonate is located between layers of a layered carbide. The holding time at the heating temperature may be, for example, 50 hours or less. In particular, the holding time is preferably 0.5 to 20 hours, and more preferably 1 to 10 hours. When the holding time is 0.5 hours or more, the formation of the complex of carbon and an alkaline earth metal carbonate is sufficiently performed. When the holding time is 20 hours or less, a carbon porous body having a relatively large BET specific surface area is obtained.

In the method for producing a carbon porous body of the present invention, for example, in the case where the alkaline earth metal carbonate is calcium carbonate, water or an acidic aqueous solution is preferably used as the washing liquid that can dissolve the alkaline earth metal carbonate. Examples of the acidic aqueous solution include aqueous solutions of hydrochloric acid, nitric acid, acetic acid, oxalic acid, or the like. It is believed that, by performing this washing, in the complex, portions where the alkaline earth metal carbonate has been present become cavities.

The ammonia-adsorbing material of the present invention is formed of the carbon porous body described above. In this ammonia-adsorbing material, a value determined by subtracting an amount of ammonia adsorption at an ammonia pressure of 300 kPa from an amount of ammonia adsorption at an ammonia pressure of 390 kPa is preferably 0.50 g/g or more. This is because a large amount of ammonia can be adsorbed and released by controlling the ammonia pressure.

### EXAMPLES

### [Example 1]

### (Synthesis of calcium salt of terephthalic acid)

Terephthalic acid (0.1 mol) and calcium hydroxide (0.1 mol) were added to 200 mL of water and heated in a water bath at 80°C for four hours. The resulting crystals of a calcium salt of terephthalic acid were isolated by filtration, and air-dried at room temperature.

### (Carbonization of calcium salt of terephthalic acid)

The calcium salt (4 g) of terephthalic acid was arranged in an electric tubular furnace, and the inside of the tubular furnace was substituted with an inert gas (flow rate: 0.1 L/min). Nitrogen gas was used as the inert gas. Alternatively, argon gas may be used. A tubular furnace temperature was increased to a preset temperature over a period of one hour while maintaining the gas flow. In this Example, the preset temperature was 550°C. After the completion of the temperature increase, while maintaining the gas flow, the temperature was maintained at the preset temperature for two hours and cooling was then performed to room temperature. Consequently, a complex of carbon and calcium carbonate was produced in the tubular furnace.

### (Acid treatment of complex)

The complex was taken out from the tubular furnace, and dispersed in 500 mL of water. Subsequently, 50 mL of 2 mol/L hydrochloric acid was added to the resulting dispersion liquid, and the resulting mixture was stirred. Foaming due to the decomposition of calcium carbonate was observed. The dispersion liquid was filtered and then dried. Thus, a target carbon porous body was obtained (yield: about 1 g).

### [Example 2]

A carbon porous body was obtained as in Example 1 except that the preset temperature of the tubular furnace temperature in the carbonization of the calcium salt of terephthalic acid was 600°C.

### [Example 3]

A carbon porous body was obtained as in Example 1 except that the preset temperature of the tubular furnace temperature in the carbonization of the calcium salt of terephthalic acid was 700°C.

### [Example 4]

A carbon porous body was obtained as in Example 1 except that 0.15 mol of terephthalic acid was used relative to 0.1 mol of calcium hydroxide.

### [Example 5]

A carbon porous body was obtained as in Example 1 except that 0.15 mol of calcium hydroxide was used relative to 0.1 mol of terephthalic acid.

### [Example 6]

A carbon porous body was obtained as in Example 2 except that the holding time at the preset temperature (600°C) in the carbonization of the calcium salt of terephthalic acid was 20 hours.

### [Comparative Example 1]

A carbon porous body was obtained as in Example 1 except that the preset temperature of the tubular furnace temperature in the carbonization of the calcium salt of terephthalic acid was 500°C.

### [Comparative Example 2]

The experiment for producing a carbon porous body was conducted as in Example 1 except that the preset temperature of the tubular furnace temperature in the carbonization of the calcium salt of terephthalic acid was 800°C. However, a carbon porous body could not be obtained.

### [Comparative Example 3]

A carbon porous body of Comparative Example 3 is MESO-COAL (trade name) (manufactured by Cataler Corporation) which is a commercially available activated carbon.

### [Comparative Example 4]

A carbon porous body of Comparative Example 4 is Bellfine BG-20-1 (trade name) (manufactured by AIR WATER BELLPEARL INC.) which is a commercially available activated carbon.

### [Measurement of characteristic values]

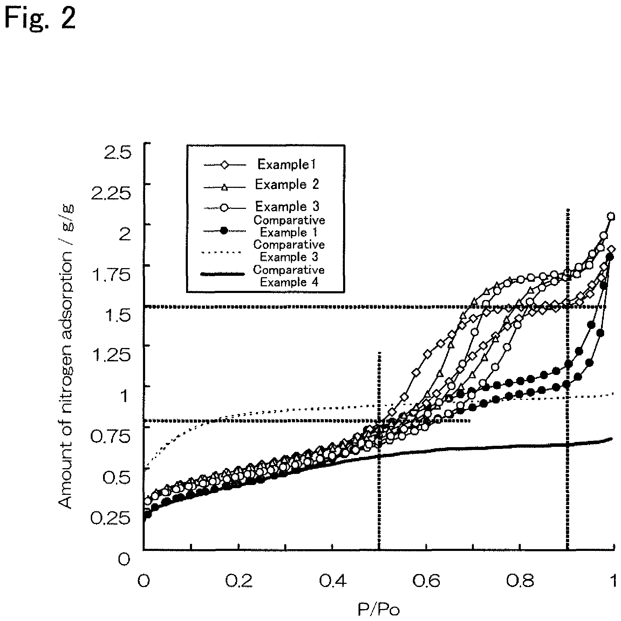

With regard to each of the carbon porous bodies of Examples 1 to 5 and Comparative Examples 1, 3, and 4, characteristic values shown in Table 1 were determined from a measurement of nitrogen adsorption at the liquid nitrogen temperature (77 K). Fig. 2 includes nitrogen adsorption isotherms at 77 K of Examples 1 to 3 and Comparative Examples 1, 3, and 4. The graph of nitrogen adsorption isotherms of Examples 4 and 5 was substantially the same as that of Example 1, and thus illustration of the adsorption isotherms on the figure was omitted. In Table 1, the BET specific surface area was calculated from BET analysis. The volume of pores having diameters of 2 nm or less was calculated by density functional theory (DFT) analysis. The shape of the pores was assumed to be a slit-like pore structure. The value of an amount A_{N2}1 of nitrogen adsorption at a relative pressure P/P₀ of 0.5 and the value of an amount A_{N2}2 of nitrogen adsorption at a relative pressure P/P₀ of 0.9 were read from the graph of the nitrogen adsorption isotherms. The difference between the two values was defined as a difference ΔA_{N2} (= A_{N2}2 - A_{N2}1) in the amount of nitrogen adsorption.

**[Table 1]**

| | *1 Molar ratio | Temperature in carbonization (°C) | BET specific surface (m²/g) | Volume of pores of *φ* 2nm or less (mL/g) | Amount AN₂1 of nitrogen adsorption (P/P₀=0.5) (g/g) | Amount A_{N2}2 if nitrogen adsorption (P/P₀=0.9) (g/g) | Difference ΔA_{N2} in amount of nitogen adsorption (=A_{N₂}2-A_{N₂}1) (g/g) | *2 Difference Δ A_{NH₃} in amount of NH₃ adsorption (g/g) |
|---|---|---|---|---|---|---|---|---|
| Example 1 | 1 : 1 | 550 | 1389 | 0.11 | 0.73 | 1.50 | 0.77 | 0.560 |
| Example 2 | 1 : 1 | 600 | 1381 | 0.11 | 0.71 | 1.68 | 0.97 | 0.706 |
| Example 3 | 1 : 1 | 700 | 1256 | 0.10 | 0.65 | 1.67 | 1.02 | 0.764 |
| Example 4 | 1.5: 1 | 550 | 1355 | 0.10 | 0.71 | 1.50 | 0.79 | 0.603 |
| Example 5 | 1 : 1.5 | 550 | 1378 | 0.11 | 0.71 | 1.54 | 0.83 | 0.571 |
| Comparative Example 1 | 1 : 1 | 500 | 1179 | 0.10 | 0.68 | 1.02 | 0.34 | 0.278 |
| Comparative Example 2 | 1 : 1 | 800 | - | - | - | - | - | - |
| Comparative Example 3 | MESO-COAL ^{*3} is used | | 1472 | 0.09 | 0.72 | 0.81 | 0.09 | 0.06 |
| Comparative Example 4 | Bellfine BG-20-1^{*4} is used | | 2120 | 0.05 | 0.88 | 0.93 | 0.05 | 0.03 |

| | | | | | | | | |
|---|---|---|---|---|---|---|---|---|
| *1: The "molar ratio" represents "number of moles of terephthalic acid:number of moles of calcium hydroxide". *2: The "difference ΔANH₃ in amount of NH₃ adsorption" is a value determined by subtracting an amount of NH₃ adsorption at a NH₃ pressure of 300 kPa from an amount of NH₃ adsorption at a NH₃ pressure of 390 kPa. *3: MESO-COAL is existing activated carbon and is a trade name of Cataler Corporation. *4: Bellfine BG-20-1 is existing activated carbon and is a trade name of AIR WATER BELLPEARL INC. | | | | | | | | |

As is apparent from Table 1, in each of the carbon porous bodies of Examples 1 to 5, the BET specific surface area was large, namely, 1,200 m²/g or more, and the volume of pores having diameters of 2 nm or less, the volume being determined by DFT analysis, was small, namely, 0.12 mL/g or less. Furthermore, the nitrogen adsorption isotherms of the carbon porous bodies of Examples 1 to 3 shown in Fig. 2 belonged to Type IV defined by the IUPAC classification (type showing that the porous body has mesopores, refer to Fig. 1). The nitrogen adsorption isotherms of Examples 4 and 5, which are not shown in the figure, showed substantially the same results. Accordingly, it is believed that the carbon porous bodies of Examples 1 to 5 are mostly made up of mesopores.

Furthermore, regarding the carbon porous bodies of Examples 1 to 5, in the nitrogen adsorption isotherms, the amount A_{N2}2 of nitrogen adsorption at a relative pressure P/P₀ of 0.9 was 1.5 g/g or more, the amount A_{N2}1 of nitrogen adsorption at a relative pressure P/P₀ of 0.5 was 0.8 g/g or less, and the difference ΔA_{N2} in the amount of nitrogen adsorption was 0.7 g/g or more. These results show that, regarding the carbon porous bodies of Examples 1 to 5, the amount of change in the amount of nitrogen adsorption with respect to the amount of change in the relative pressure is large in the range where the relative pressure is relatively large. Accordingly, regarding the carbon porous bodies of Examples 1 to 5, when a gas pressure is changed in a particular range with regard to a particular gas (for example, nitrogen or the like), the amount of adsorption and desorption of the gas can be increased.

In contrast, regarding the carbon porous body of Comparative Example 1, the BET specific surface area was small, namely, less than 1,200 m²/g, the amount A_{N2}2 of nitrogen adsorption at a relative pressure P/P₀ of 0.9 was as small as 1.02 g/g, and the difference ΔA_{N2} in the amount of nitrogen adsorption was as small as 0.34 g/g. Regarding the carbon porous bodies of Comparative Examples 3 and 4, the difference ΔA_{N2} in the amount of nitrogen adsorption was extremely small, namely, 0.09 g/g or less. Accordingly, unlike Examples 1 to 5, regarding Comparative Examples 1, 3, and 4, even if a gas pressure is changed in a particular range with regard to a particular gas, the amount of adsorption and desorption of the gas cannot be increased.

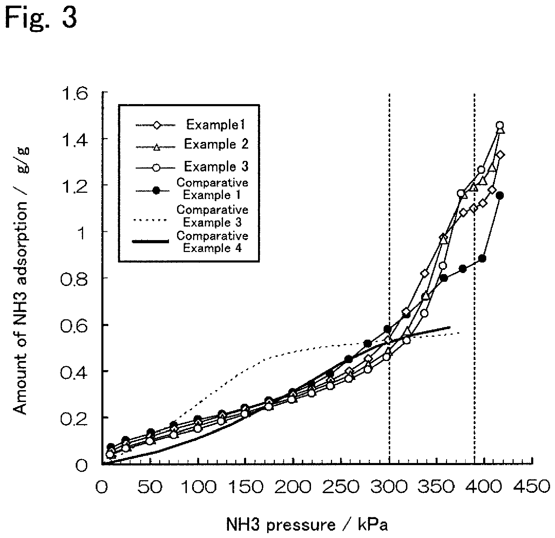

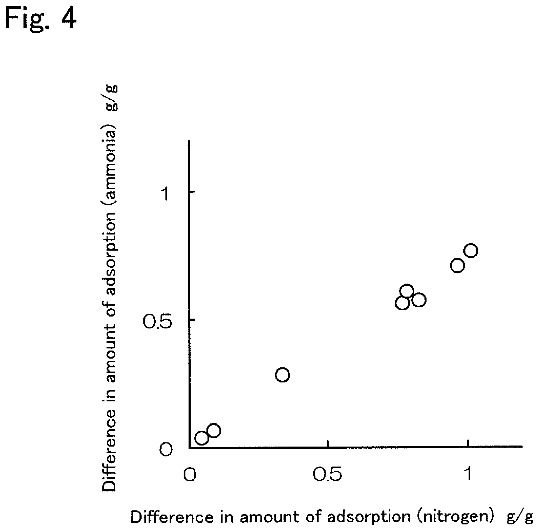

For each of the carbon porous bodies, an adsorption measurement at 273 K was conducted using ammonia as a particular gas. The saturated vapor pressure was 430 kPa. A difference ΔA_{NH3} in an amount of ammonia adsorption was determined by subtracting an amount of ammonia adsorption at an ammonia pressure of 300 kPa from an amount of ammonia adsorption at an ammonia pressure of 390 kPa. The values of the difference ΔA_{NH3} are shown in Table 1. Fig. 3 includes ammonia adsorption isotherms of Examples 1 to 3 and Comparative Examples 1, 3, and 4. Ammonia adsorption isotherms of Examples 4 and 5 were substantially the same as that of Example 1, and thus illustration of the adsorption isotherms on the figure was omitted. Fig. 4 is a graph showing a relationship between the difference ΔA_{N2} in the amount of nitrogen adsorption and the difference ΔA_{NH3} in the amount of ammonia adsorption. Fig. 4 shows that there is a good correlation between the difference ΔA_{N2} in the amount of nitrogen adsorption and the difference ΔA_{NH3} in the amount of ammonia adsorption.

As shown in Table 1, in the ammonia pressure range of 300 to 390 kPa, a large difference ΔA_{NH3} in the amount of ammonia adsorption of 0.50 g/g or more was obtained in Examples 1 to 5, whereas only small values, namely, 0.278 g/g in Comparative Example 1 and 0.06 g/g or less in Comparative Examples 3 and 4 were obtained. These results show that, in the case where the carbon porous bodies of Examples 1 to 5 are used, a large amount of ammonia can be adsorbed and released by controlling the ammonia pressure.

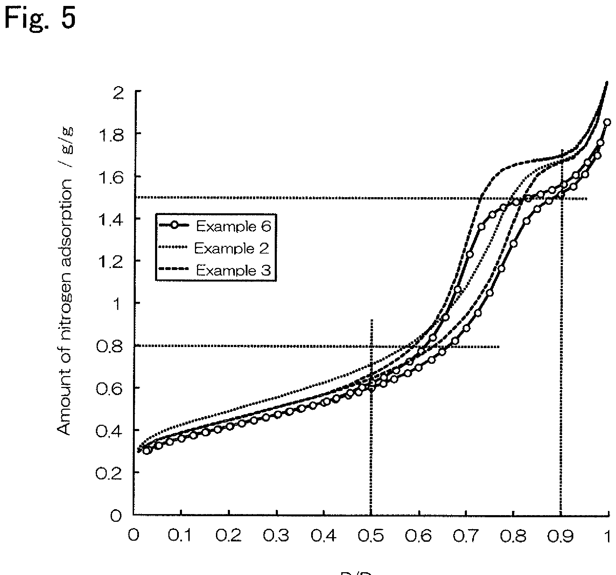

With regard to the carbon porous body of Example 6, characteristic values were determined from a measurement of nitrogen adsorption at the liquid nitrogen temperature (77 K) as in Examples 1 to 5. Fig. 5 shows a nitrogen adsorption isotherm of Example 6. For comparison, nitrogen adsorption isotherms of Examples 2 and 3 are also shown in Fig. 5. In Example 6, the volume of pores having diameters of 2 nm or less was 0.10 mL/g, and the BET specific surface area was 1,155 m²/g. The amount A_{N2}1 of nitrogen adsorption was 0.61 g/g, the amount A_{N2}2 of nitrogen adsorption was 1.52 g/g, and the difference ΔA_{N2} in the amount of nitrogen adsorption was 0.91 g/g.

As is apparent from the results described above, in the carbon porous body of Example 6, the BET specific surface area was less than 1,200 m²/g, which was smaller than those of Examples 1 to 5, but was 800 m²/g or more, which was relatively large. The volume of pores having diameters of 2 nm or less, the volume being determined by DFT analysis, was small, namely, 0.12 mL/g or less as in Examples 1 to 5. In addition, the nitrogen adsorption isotherm of the carbon porous body of Example 6 shown in Fig. 5 belonged to Type IV defined by the IUPAC classification (type showing that the porous body has mesopores, refer to Fig. 1), as in Examples 1 to 5. Accordingly, it is believed that the carbon porous body of Example 6 is mostly made up of mesopores.

Furthermore, regarding the carbon porous body of Example 6, in the nitrogen adsorption isotherm, the amount A_{N2}2 of nitrogen adsorption at a relative pressure P/P₀ of 0.9 was 1.5 g/g or more, the amount A_{N2}1 of nitrogen adsorption at a relative pressure P/P₀ of 0.5 was 0.8 g/g or less, and the difference ΔA_{N2} in the amount of nitrogen adsorption was 0.7 g/g or more. These results show that, regarding the carbon porous body of Example 6, the amount of change in the amount of nitrogen adsorption with respect to the amount of change in the relative pressure is large in the range where the relative pressure is relatively large. Accordingly, regarding the carbon porous body of Example 6, when a gas pressure is changed in a particular range with regard to a particular gas (for example, nitrogen or the like), the amount of adsorption and desorption of the gas can be increased.

Furthermore, the nitrogen adsorption isotherm of Example 6 was similar to those of Examples 2 and 3. As described above, there was a good correlation between the difference ΔA_{N2} in the amount of nitrogen adsorption and the difference ΔA_{NH3} in the amount of ammonia adsorption, as shown in Fig. 4. Accordingly, it was believed that the carbon porous body of Example 6 has ammonia adsorption characteristics similar to those of the carbon porous bodies of Examples 2 and 3, and can adsorb and release a large amount of ammonia.

### INDUSTRIAL APPLICABILITY

The carbon porous body of the present invention can be used as, for example, not only an adsorption material of nitrogen or ammonia but also an electrode material of an electrochemical capacitor, a material that supports an enzyme electrode of a biofuel cell, an adsorbing material of a canister, an adsorbing material of a fuel refining facility, etc.

It is explicitly stated that all features disclosed in the description and/or the claims are intended to be disclosed separately and independently from each other for the purpose of original disclosure as well as for the purpose of restricting the claimed invention independent of the composition of the features in the embodiments and/or the claims. It is explicitly stated that all value ranges or indications of groups of entities disclose every possible intermediate value or intermediate entity for the purpose of original disclosure as well as for the purpose of restricting the claimed invention, in particular as limits of value ranges.

## Claims

1. A carbon porous body wherein a volume of pores having diameters of 2 nm or less, the volume being determined by DFT analysis, is 0.12 mL/g or less, a nitrogen adsorption isotherm at a temperature of 77 K belongs to Type IV of an IUPAC classification, and, in the nitrogen adsorption isotherm, an amount of adsorption at a relative pressure P/P₀ of 0.5 is 0.8 g/g or less and an amount of adsorption at a relative pressure P/P₀ of 0.9 is 1.5 g/g or more.

2. The carbon porous body according to Claim 1, having a BET specific surface area of 800 m²/g or more.

3. The carbon porous body according to Claim 1 or 2, having a BET specific surface area of 1,200 m²/g or more.

4. A method for producing a carbon porous body comprising:
heating an alkaline earth metal salt of benzene dicarboxylic acid in an inert atmosphere at 550°C to 700°C to form a complex of carbon and an alkaline earth metal carbonate, and removing the carbonate by washing the complex with a washing liquid that can dissolve the carbonate to obtain a carbon porous body.

5. The method for producing a carbon porous body according to Claim 4,
wherein the alkaline earth metal salt of benzene dicarboxylic acid is obtained by mixing benzene dicarboxylic acid and a hydroxide of an alkaline earth metal in water.

6. The method for producing a carbon porous body according to Claim 5,
wherein a molar ratio of the benzene dicarboxylic acid to the hydroxide of the alkaline earth metal is in the range of 1.5:1 to 1:1.5.

7. The method for producing a carbon porous body according to any one of Claims 4 to 6, wherein the alkaline earth metal salt of benzene dicarboxylic acid is a calcium salt of terephthalic acid.

8. The method for producing a carbon porous body according to any one of Claims 4 to 7,
wherein the carbon porous body obtained is the carbon porous body according to Claim 1.

9. An ammonia-adsorbing material comprising the carbon porous body according to any one of Claims 1 to 3.

10. The ammonia-adsorbing material according to Claim 9,
wherein a value determined by subtracting an amount of ammonia adsorption at an ammonia pressure of 300 kPa from an amount of ammonia adsorption at an ammonia pressure of 390 kPa is 0.50 g/g or more.

## Patentansprüche

1. Poröser Kohlenstoffkörper, bei dem das Volumen von Poren mit Durchmessern von 2 nm oder weniger, wobei das Volumen durch eine DFT-Analyse bestimmt wird, 0,12 mL/g oder weniger beträgt, die Stickstoffadsorptionsisotherme bei einer Temperatur von 77 K zu dem Typ IV der IUPAC-Klassifikation gehört und in der Stickstoffadsorptionsisotherme die Menge der Adsorption bei einem relativen Druck von P/P₀ von 0,5 0,8 g/g oder weniger beträgt und die Menge der Adsorption bei einem relativen Druck von P/P₀ von 0,9 1,5 g/g oder mehr beträgt.

2. Poröser Kohlenstoffkörper nach Anspruch 1, der eine spezifische BET-Oberfläche von 800 m²/g oder mehr aufweist.

3. Poröser Kohlenstoffkörper nach Anspruch 1 oder 2, der eine spezifische BET-Oberfläche von 1200 m²/g oder mehr aufweist.

4. Verfahren zur Herstellung eines porösen Kohlenstoffkörpers, umfassend:
Erwärmen eines Erdalkalimetallsalzes von Benzoldicarbonsäure in einer inerten Atmosphäre bei 550 °C bis 700 °C zur Bildung eines Komplexes aus Kohlenstoff und einem Erdalkalimetallcarbonat, und Entfernen des Carbonats durch Waschen des Komplexes mit einer Waschflüssigkeit, die das Carbonat lösen kann, so dass ein poröser Kohlenstoffkörper erhalten wird.

5. Verfahren zur Herstellung eines porösen Kohlenstoffkörpers nach Anspruch 4,
bei dem das Erdalkalimetallsalz von Benzoldicarbonsäure durch Mischen von Benzoldicarbonsäure und eines Hydroxids eines Erdalkalimetalls in Wasser erhalten wird.

6. Verfahren zur Herstellung eines porösen Kohlenstoffkörpers nach Anspruch 5,
bei dem das molare Verhältnis der Benzoldicarbonsäure zu dem Hydroxid des Erdalkalimetalls im Bereich von 1,5:1 bis 1:1,5 liegt.

7. Verfahren zur Herstellung eines porösen Kohlenstoffkörpers nach einem der Ansprüche 4 bis 6, bei dem das Erdalkalimetallsalz von Benzoldicarbonsäure ein Calciumsalz von Terephthalsäure ist.

8. Verfahren zur Herstellung eines porösen Kohlenstoffkörpers nach einem der Ansprüche 4 bis 7,
bei dem der erhaltene poröse Kohlenstoffkörper der poröse Kohlenstoffkörper nach Anspruch 1 ist.

9. Ammoniak-adsorbierendes Material, das den porösen Kohlenstoffkörper nach einem der Ansprüche 1 bis 3 umfasst.

10. Ammoniak-adsorbierendes Material nach Anspruch 9,
bei dem ein Wert, der durch Subtrahieren der Menge einer Ammoniakadsorption bei einem Ammoniakdruck von 300 kPa von der Menge einer Ammoniakadsorption bei einem Ammoniakdruck von 390 kPa bestimmt wird, 0,50 g/g oder mehr beträgt.

## Revendications

1. Corps poreux à base de carbone dans lequel un volume de pores ayant des diamètres de 2 nm ou moins, le volume étant déterminé par analyse DFT, est de 0,12 mL/g ou moins, une isotherme d'adsorption d'azote à une température de 77 K appartient au type IV d'une classification UICPA, et, dans l'isotherme d'adsorption d'azote, une quantité d'adsorption à une pression relative P/P₀ de 0,5 est de 0,8 g/g ou moins et une quantité d'adsorption à une pression relative P/P₀ de 0,9 est de 1,5 g/g ou plus.

2. Corps poreux à base de carbone selon la revendication 1, ayant une surface spécifique BET de 800 m²/g ou plus.

3. Corps poreux à base de carbone selon la revendication 1 ou 2, ayant une surface spécifique BET de 1 200 m²/g ou plus.

4. Procédé de production d'un corps poreux à base de carbone comprenant :
le chauffage d'un sel de métal alcalino-terreux d'acide benzène dicarboxylique dans une atmosphère inerte à 550°C à 700°C pour former un complexe de carbone et d'un carbonate de métal alcalino-terreux, et l'élimination du carbonate par lavage du complexe avec un liquide de lavage qui peut dissoudre le carbonate pour obtenir un corps poreux à base de carbone.

5. Procédé de production d'un corps poreux à base de carbone selon la revendication 4,
dans lequel le sel de métal alcalino-terreux d'acide benzène dicarboxylique est obtenu par mélange d'acide benzène dicarboxylique et d'un hydroxyde d'un métal alcalino-terreux dans de l'eau.

6. Procédé de production d'un corps poreux à base de carbone selon la revendication 5,
dans lequel un rapport molaire entre l'acide benzène dicarboxylique et l'hydroxyde du métal alcalino-terreux est dans la plage de 1,5 : 1 à 1 : 1,5.

7. Procédé de production d'un corps poreux à base de carbone selon l'une quelconque des revendications 4 à 6, dans lequel le sel de métal alcalino-terreux d'acide benzène dicarboxylique est un sel de calcium d'acide téréphtalique.

8. Procédé de production d'un corps poreux à base de carbone selon l'une quelconque des revendications 4 à 7,
dans lequel le corps poreux à base de carbone obtenu est le corps poreux à base de carbone selon la revendication 1.

9. Matériau adsorbant d'ammoniaque comprenant le corps poreux à base de carbone selon l'une quelconque des revendications 1 à 3.

10. Matériau adsorbant d'ammoniaque selon la revendication 9,
dans lequel une valeur déterminée par soustraction d'une quantité d'adsorption d'ammoniaque à une pression d'ammoniaque de 300 kPa d'une quantité d'adsorption d'ammoniaque à une pression d'ammoniaque de 390 kPa est de 0,50 g/g ou plus.
